# EUROPEAN PATENT SPECIFICATION

(11) **EP 0 950 738 B1**
(45) Date of publication and mention of the grant of the patent: **10.11.2004**
(21) Application number: 98103600.7
(22) Date of filing: 02.03.1998
(51) Int. Cl.: D03D 15/00, B29C 65/00

(54) **A fabric for welding**
Verschweissbares Gewebe
Tissu soudable

(43) Date of publication of application: 20.10.1999
(73) Proprietor: Kabushiki kaisha Orusen, Tokyo (JP); Kabushiki kaisha Mathui Tape Kougyousho, hamamathu-shi, Shizuoka-ken (JP)
(72) Inventor: Kikuchi, Yuzo, Tokyo (JP)
(74) Representative: Forstmeyer, Dietmar, Dr. rer. nat., Dipl.-Chem.

(56) References cited:
- DE-B- 2 843 385
- FR-A- 1 271 602
- FR-A- 1 587 428
- FR-A- 2 079 653
- US-A- 3 249 129
- US-A- 4 372 998
- PATENT ABSTRACTS OF JAPAN vol. 097, no. 004, 30 April 1997 -& JP 08 337940 A (MATSUI TAPE KOGYOSHO:KK;ORUSEN:KK), 24 December 1996,
- PATENT ABSTRACTS OF JAPAN vol. 095, no. 011, 26 December 1995 -& JP 07 207547 A (KEIKO HATTORI), 8 August 1995,

## Description

### [Field of Invention]

The present invention relates to a fabric for welding to be welded with a sheet such as a cloth sheet, a synthetic resin sheet, etc. for the purpose of attaching the sheet to a column, a stake, a log, a building, a footing, etc. or connecting the sheet with another sheet.

### [Conventional Art]

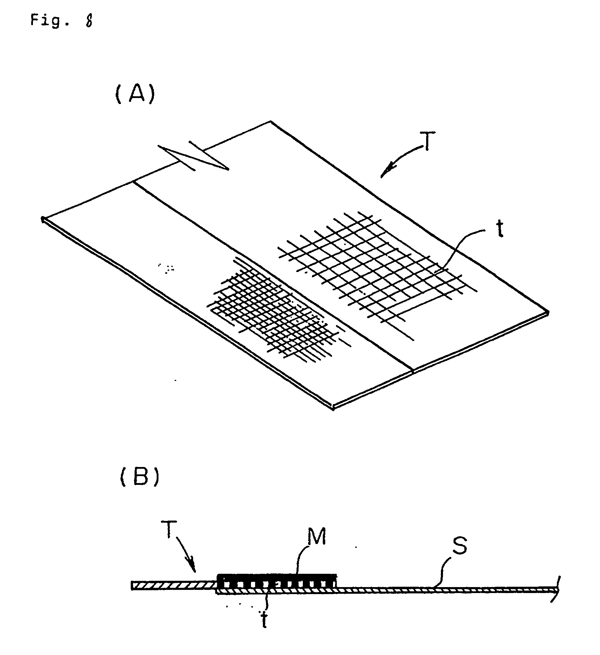

As a conventional fabric for welding, a belt-form fabric of special design has been used. As shown in Fig. 8 (A), some portion of such a belt-form fabric "T" is woven very coarsely. Fig. 8 (B) illustrates how the fabric is welded with a sheet. The very coarsely woven portion is sandwiched between a welding tape "M" and a sheet "S" and heat-pressed so that the welding tape will be forced to melt and intrude into the gaps of the very coarsely woven portion "t". Thus, the fabric is unitized with the sheet "S".

A fabric according to the preamble of claim 1 is known from DE-A-2 843 385.

### [Problems Invention Attempts to Solve]

However, the above-mentioned fabric for welding of the conventional art requires a welding tape "M" to be correctly positioned on the coarsely woven portion of the belt-form fabric "T" overlapped on the welding zone of a sheet "S". Such correct positioning is troublesome and takes considerable time and labor.

The present invention was made to solve such problems. The object of the invention is to offer an excellent fabric for welding enabling easy and perfect welding to any sheet.

### [Means for Solving Problems]

The fabric for welding of the present invention is defined in claim 1 and has a welding portion therein extending partly or entirely width-wise and the welding portion uses a warp coated with thermoplastic synthetic resin such as PVC etc. or uses a warp comprising a fiber made of said resin or coated with said resin.

The present invention especially refers to a fabric (1; 2; 3) in belt form and having a welding portion (A) for hot-melt welding it to a sheet, such as a cloth sheet or a synthetic resin sheet, for enabling attachment of said sheet to a column, a stake, a log, a building, a footing or the like or for connecting it to another sheet, wherein at least a portion of said fabric extending lengthwise comprises a thermoplastic synthetic resin on at least one side thereof.

### [Brief Descriptions on Drawings]

Fig. 1 is a plan view showing a fabric for welding as an embodiment of the present invention

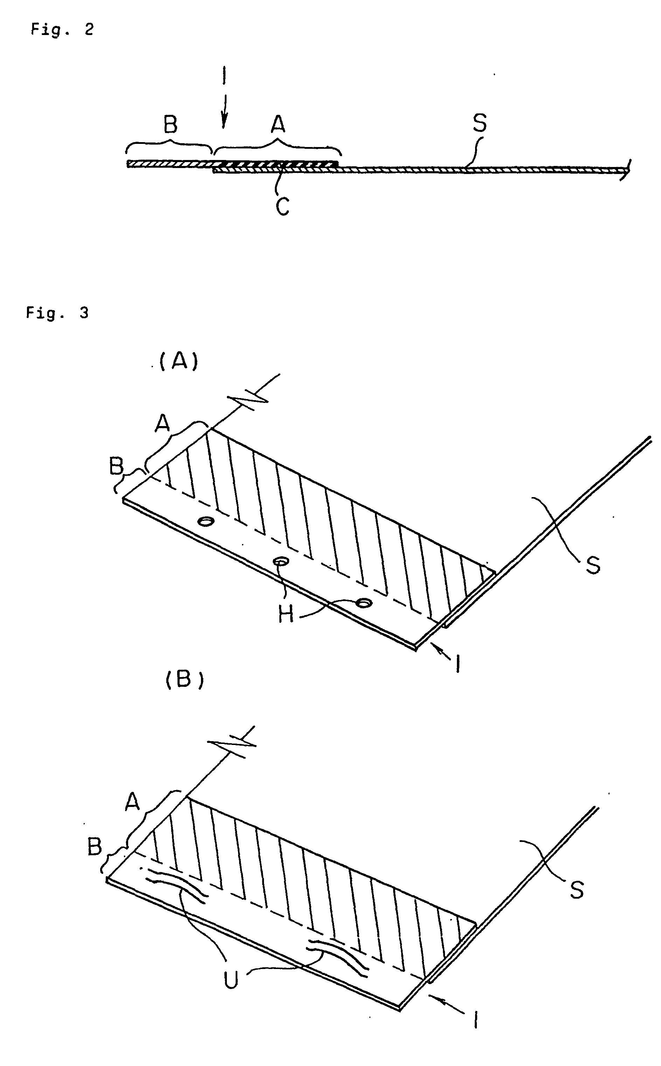

Fig. 2 is a sectional view showing how the fabric for welding in Fig. 1 is welded to a sheet
Fig. 3 is a perspective view showing the examples of practicing the fixing portion of the fabric for welding
Fig. 4 is a perspective view showing a fabric for welding as another embodiment of the present invention
Fig. 5 is a perspective view showing a fabric for welding as a further embodiment of the present invention
Fig. 6 is a perspective view of an embodiment as three-dimensional fabric for welding
Fig. 7 is a perspective view of another embodiment as three-dimensional fabric for welding
Fig. 8 is a drawing to help explain a conventional fabric for welding

### [Mode of Embodiment of Invention]

The detailed descriptions on some embodiments of the present invention are given below, referring to some drawings.

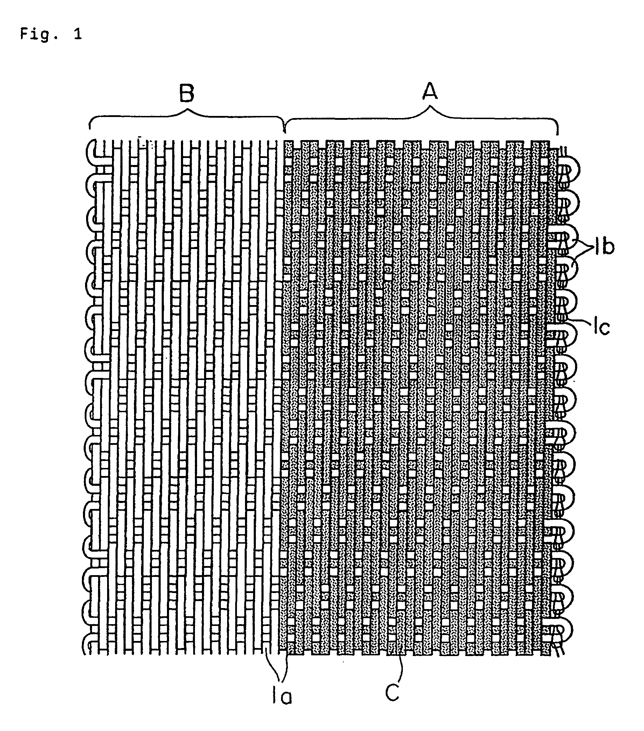

In Fig. 1, the numeral "1" shows the fabric for welding in the form of a belt which is twill-woven from a warp "1a" and a weft "1b" with use of a needle loom. The weave mode in the present invention is not limited to twill weave. Plain weave, satin weave and any other weave modes will do. Other weaving machines than a needle loom can be used for the fabric of the present invention. In this embodiment as just an example of the present invention, the one side of the fabric for welding is reinforced by a chain-knitting of an edge thread "1c".

The above-mentioned belt-form fabric for welding "1" is divided width-wise into a welding portion "A" and a fixing portion "B". The warp "1a" in the welding portion "A" is coated with some thermoplastic synthetic resin such as PVC etc. In this embodiment, only the warp "1a" is coated; however, the weft "1b" may also be coated so far as it does not affect the weaving adversely.

When the welding portion "A" of the fabric for welding "1" is overlapped on the fringe of a sheet "S" and heat-pressed, the thermoplastic resin around the warp "1a" in the welding portion "A" is forced to melt and adhere securely to the surface of the sheet "1". As a result, the fabric for welding "1" is welded perfectly with the sheet S", thus both members being rigidly unitized.

Any of spun yarn, filament yarn and textured yam can be used for the warp "1a" and weft "1b" herein. The material of those yarns can be natural fiber, chemical fiber (including synthetic fiber) or a blend of them.

In the case where the warp "1a" consists of a multi-fiber assembly such as spun yarn, multi-filament yarn, etc., some of the components can either be the fiber coated with thermoplastic synthetic resin such as PVC etc. or be thermoplastic synthetic fiber itself. The weft "1b" can also be composed in the same way, as necessary.

Fig. 3 shows how the fixing portion "B" of the fabric for welding "1" is provided with the auxiliary fixing means. In Fig. 3 (A), some holes "H" are bored at a suitable interval in the fixing portion "B" in the fabric for welding "1" to facilitate fixing the unit to another unit or to a column etc. with use of a rope, a cord, etc. attached to the holes. Fig. 3 (B) gives the another example where the fixing portion "B" is provided with such straps "U" as disclosed by Unexamined Japanese Patent Publication H7-207547.

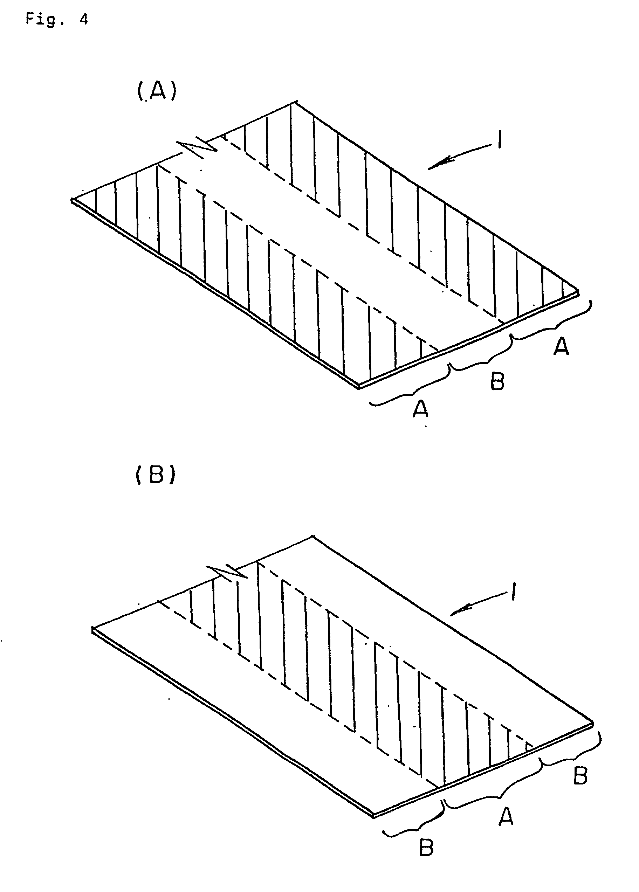

The above-mentioned examples of practicing the invention show a welding portion "A" on one side of the fabric for welding "1". The welding portion "A" can be made in both sides of the fabric for welding "1" as shown in Fig. 4 (A) and also can be in the middle part as shown in Fig. 4 (B). Also in these cases, some auxiliary fixing means such as straps etc. can be provided.

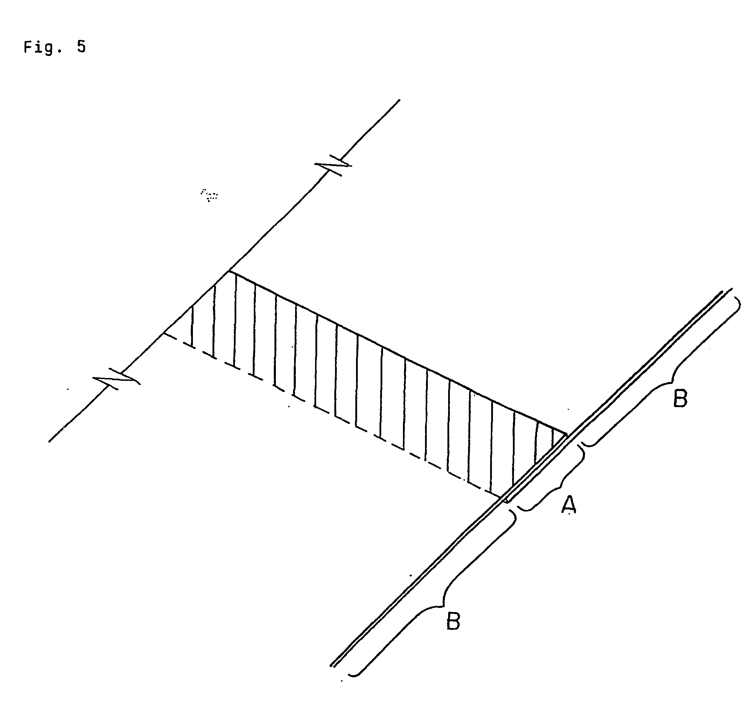

The fabric for welding can be welded with another fabric for welding, as shown in Fig. 5.

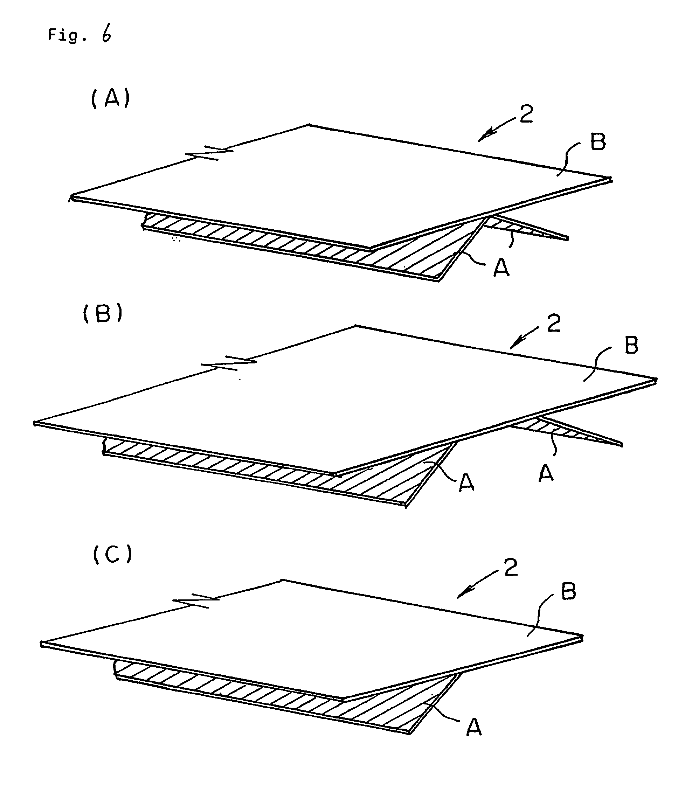

Fig. 6 shows some three-dimensionally woven fabric for welding "2". Fig. 6 (A) gives an example where two welding portions "A" are branched from the middle line of a belt-form fixing portion "B". And Fig. 6 (B) gives another example where two welding portions "A" are branched each from a line just apart from the middle line of a fixing portion "B".

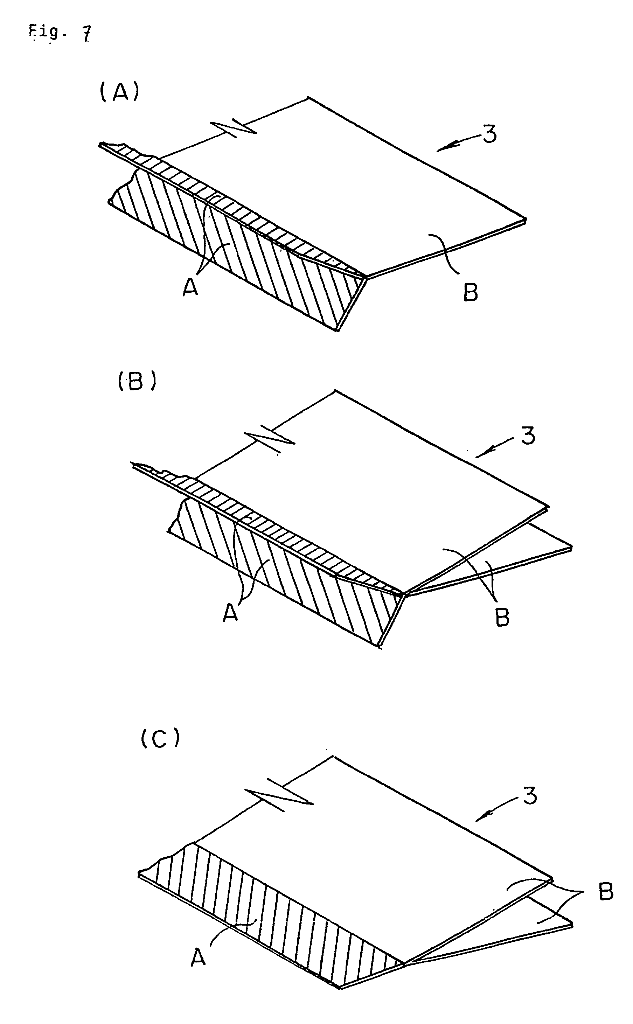

Fig. 7 indicates some other variety of three-dimensional fabric for welding "3". Fig. 7 (A) shows the case where two welding portions "A" are branched from one edge of a belt-form fixing portion "B". Fig. 7 (B) gives the case where two fixing portions "B" are connected edge-to-edge with each other, and from the connecting edge, two welding portions "A" are branched. And Fig. 7 (C) gives the case where two fixing portions "B" are connected edge-to-edge with each other, and from the connecting edge, a single welding portion "A" is branched. The three-dimensional weaves in the above-referenced Fig. 7 (B) and Fig. 7 (C) take the same construction as those in Fig. 6 (A) and 6 (C) respectively, but they differ in the mode of weave. The weave compositions of the three-dimensional fabric in Fig. 6 and Fig. 7 are described in detail in the specifications of JPN Patent Application H8-91783.

### [Effect of Invention]

In a fabric having a welding portion and fixing portion thereon width-wise, the welding portion uses a warp coated with thermoplastic synthetic resin such as PVC etc. or a warp comprising the fiber coated with such resin. Therefore, the fabric for welding offered herein enables easy and perfect welding to sheets.

### Numerals/Symbols Denoting

- 1:: fabric for welding;
- 1a:: warp;
- 1b:: weft;
- 1c:: edge thread;
- 2:: fabric for welding;
- 3:: fabric for welding;
- "A":: welding portion;
- "B":: fixing portion;
- "C":: coated part;
- "H":: hole;
- "M":: welding tape;
- "S":: sheet;
- "T":: belt-form fabric;
- "t":: coarsely woven part;
- "U":: strap

## Claims

1. A woven fabric (1; 2; 3) in belt form and having a welding portion (A) for hot-melt welding it to a sheet, such as a cloth sheet or a synthetic resin sheet, for enabling attachment of said sheet to a column, a stake, a log, a building, a footing or the like or for connecting the sheet with another sheet, wherein at least the warp (1a) of said welding portion completely or partially consists of fibers made from or coated with a thermoplastic synthetic resin, and **characterized in that** at least a portion (B) of said fabric is provided with fixing means, selected from holes (H) and straps (U), for fi xing it to another object, such as said column or the like by use of a cord or a rope.

2. The fabric (1; 2; 3) of claim 1, wherein said thermoplastic synthetic resin is PVC.

3. The fabric (1; 2; 3) of claim 1 or 2, wherein at least said warp (1a) comprises a spun yarn, a filament yarn or a textured yarn.

4. The fabric (1; 2; 3) of claim 3, wherein said yarn comprises natural fibers, chemical fibers or a blend thereof.

5. The fabric (1; 2; 3) of claim 4, wherein at least some of the fibers either consist of or are coated with said thermoplastic synthetic resin.

6. The fabric (1; 2; 3) of any one of the preceding claims, wherein, in addition to said warp (1a), the weft (1b), and, as the case may be, also an edge thread (1c) completely or partially consists of fibers made from or coated with said thermoplastic synthetic resin.

7. The fabric (1; 2; 3) of any one of the preceding claims, wherein the welding portion (A) occupies a side or an intermediate portion only of said fabric.

8. The fabric (2; 3) of any one of the claims 1 to 6, wherein said welding portion (A) joins a flat or folded fixing portion (B) of said fabric.

9. The fabric (2; 3) of claim 8, wherein said welding portion (A) itself is folded.

10. The fabric (2) of claim 8, wherein said welding portion (A) consists of a plurality of sections branched from said fixing portion along straight lines.

## Patentansprüche

1. Gewebe (1, 2, 3) in Bahnenform und mit einem Schweißteil (A), mit dem es durch Schmelzkleben an eine Bahn, wie eine Stoffbahn oder eine Bahn aus einem synthetischen Harz, zur Befestigung der Bahn an einer Säule, einem Pfosten, einem Baumstamm, einem Gebäude, einem Fundament oder dergleichen, oder zum Verbinden der Bahn mit einer weiteren Bahn geschweißt wird, wobei zumindest die Webkette (1a) des Schweißteils vollständig oder zum Teil aus Fasern besteht, die aus einem thermoplastischen synthetischen Harz hergestellt oder damit beschichtet sind, und **dadurch gekennzeichnet ist, daß** mindestens ein Teil (B) des Gewebes mit Befestigungseinrichtungen, ausgewählt nach Löchern (H) und Laschen (U), zu dessen Befestigung an einem anderen Gegenstand, wie die Säule oder dergleichen, unter Verwendung einer Schnur oder eines Seils versehen ist.

2. Gewebe (1, 2, 3) nach Anspruch 1, wobei das thermoplastische synthetische Harz PVC ist.

3. Gewebe (1, 2, 3) nach Anspruch 1 oder 2, wobei zumindest die Webkette (1a) ein Spinngarn, ein Filamentgarn oder ein Strukturgarn umfaßt.

4. Gewebe (1, 2, 3) nach Anspruch 3, wobei das Garn Naturfasern, Chemiefasern oder ein Gemisch daraus umfaßt.

5. Gewebe (1, 2, 3) nach Anspruch 4, wobei zumindest einige der Fasern entweder aus dem thermoplastischen synthetischen Harz bestehen oder damit beschichtet sind.

6. Gewebe (1, 2, 3) nach einem der vorherigen Ansprüche, wobei neben der Webkette (1a) der Schußfaden (1b) und, je nachdem, auch ein Kantenfaden (1c) vollständig oder zum Teil aus Fasern besteht, die aus dem thermoplastischen synthetischen Harz hergestellt oder damit beschichtet sind.

7. Gewebe (1, 2, 3) nach einem der vorherigen Ansprüche, wobei der Schweißteil (A) nur eine Seite oder einen Zwischenbereich des Gewebes einnimmt.

8. Gewebe (2, 3) nach einem der Ansprüche 1 bis 6, wobei der Schweißteil (A) einen flachen oder gefalteten Befestigungsteil (B) des Gewebes verbindet.

9. Gewebe (2, 3) nach Anspruch 8, wobei der Schweißteil (A) selber gefaltet ist.

10. Gewebe (2) nach Anspruch 8, wobei der Schweißteil (A) aus einer Vielzahl von Abschnitten besteht, die sich entlang von geraden Linien von dem Befestigungsteil abzweigen.

## Revendications

1. Textile tissé (1 ; 2 ; 3) se présentant sous forme d'une bande et comportant une partie (A) soudable destinée à son soudage par fusion à chaud sur une feuille, telle qu'une feuille de tissu ou une feuille de résine de synthèse, pour permettre la fixation de ladite feuille sur une colonne, un piquet, une solive, un bâtiment, une base ou un objet similaire, ou bien à la connexion de la feuille avec une autre feuille, ou au moins la chaîne (1a) de la partie soudable est constituée complètement ou partiellement de fibres réalisées en une résine de synthèse thermoplastique ou revêtues d'une telle résine le tout **caractérisé en ce que** au moins une partie (B) dudit tissu est munie de moyens de fixation, tels que des trous (H) ou des sangles (U), destinés à le fixer sur un autre objet, tel que ladite colonne ou un objet similaire, au moyen d'un cordon ou d'une corde.

2. Textile (1 ; 2 ; 3) selon la revendication 1, dans lequel ladite résine de synthèse thermoplastique est du PVC (polychlorure de vinyle).

3. Textile (1 ; 2 ; 3) selon la revendication 1 ou 2, dans lequel au moins ladite chaîne (1a) comprend un fil filé, un fil de filament, ou un fil texturé.

4. Textile (1 ; 2 ; 3) selon la revendication 3, dans lequel ledit fil comprend des fibres naturelles, des fibres chimiques ou un mélange de celles-ci.

5. Textile (1 ; 2 ; 3) selon la revendication 4, dans lequel au moins certaines des fibres sont constituées d'une résine de synthèse thermoplastique ou sont revêtues de ladite résine de synthèse.

6. Textile (1; 2 ; 3) selon l'une quelconque des revendications précédentes, dans lequel, en plus de ladite chaîne (1a), la trame (1b) et, selon le cas, également un fil de lisière (1c) sont constitués complètement ou partiellement de fibres de résine de synthèse thermoplastique ou sont revêtus de ladite résine.

7. Textile (1; 2; 3) selon l'une quelconque des revendications précédentes, dans lequel la partie soudable (A) occupe seulement un côté ou une partie intermédiaire dudit textile.

8. Textile (2 ; 3) selon l'une quelconque des revendications 1-6, dans lequel ladite partie soudable (A) se réunit à une partie de fixation (B), plate ou repliée, dudit textile.

9. Textile (2 ; 3) selon la revendication 8, dans lequel ladite partie soudable (A) elle-même est repliée.

10. Textile (2) selon la revendication 8, dans lequel ladite partie soudable (A) consiste en une pluralité de sections ramifiées à partir de ladite partie de fixation, le long de lignes rectilignes.
